Europäisches Patentamt

European Patent Office

Office européen des brevets

(11) Veröffentlichungsnummer: **0 151 217**
**A1**

(12) # EUROPÄISCHE PATENTANMELDUNG

(21) Anmeldenummer: 84110799.8

(22) Anmeldetag: 07.09.84

(51) Int. Cl.⁴: **A 01 D 34/86**
A 01 D 34/42, A 01 D 34/52

(30) Priorität: 09.09.83 DE 3332630

(43) Veröffentlichungstag der Anmeldung:
14.08.85 Patentblatt 85/33

(84) Benannte Vertragsstaaten:
BE CH DE FR GB LI LU NL

(71) Anmelder: Helmut Werner Garten- und Landschaftsbau
Altheimer Strasse 109
D-6660 Zweibrücken 17 Mittelbach(DE)

(72) Erfinder: Werner, Gerald
Altheimer Strasse 109
D-6660 Zweibrücken 17(DE)

(74) Vertreter: Vogeser, Werner, Dipl.-Ing. et al,
Patentanwälte Hansmann & Vogeser
Albert-Rosshaupter-Strasse 65
D-8000 München 70(DE)

(54) Schlagmesserschneidwerk für ein Saugmähgerät.

(57) Die Erfindung schafft ein Schlagmesserschneidwerk mit wenigstens einer zu einer Mähfläche parallelen und im Absauggehäuse (12) eines Mähwerks angeordneten Messerwelle (11) mit Schlagmessern (13) zum Mähen und Zerkleinern von Gras und leichtem Buschwerk für ein Saugmäherät, bei dem eine Vergrößerung der Schnittbreite ohne wesentliche Verringerung der Saugfähigkeit dadurch erreicht wird, daß die Schneidkanten (16) der Schlagmesser (13) unter einem eine Förderbewegung zur Austrittsöffnung (15) des Absauggehäuses (12) hin bewirkenden Winkel S von 0°< S < 90° zur Achse der Messerwelle (11) geneigt verlaufen.

Fig.1

EP 0 151 217 A1

Croydon Printing Company Ltd.

Schlagmesserschneidwerk für ein Saugmähgerät **0151217**

Die Erfindung betrifft ein Schlagmesserschneidwerk entsprechend dem Oberbegriff des Anspruchs 1.

Ein Saugmähgerät mit einem Schlagmesserschneidwerk dieser Art ist zum Beispiel aus der DE-PS 21 59 944 bekannt. Saugmähgeräte mit solchen Schlagmesserschneidwerken können zum Anbau an unterschiedliche Trägerfahrzeuge bzw. bewegliche Ausleger an Trägerfahrzeugen verwendet werden und dienen zur Instandhaltung von Straßenrändern, Graben- und Flußböschungen, Gleisbegrenzungen, Ödflächen und dergl.

Die bekannten Schlagmesserschneidwerke mit parallel zur Mähflächen liegender Messerwelle sind durch die vorgegebene Maschinenleistung in ihrer Mähbreite begrenzt, da sich bei gegebener Maschinenleistung die Ansaugöffnung des Absauggehäuses nicht ohne weiteres vergrößern läßt, da deren Vergrößerung eine Verringerung der bei gleichem Luftdurchsatz durch die Ansaugfläche bestimmten Luftgeschwindigkeit bewirken würde. Die Luftgeschwindigkeit in der Ansaugöffnung ist jedoch ein Parameter, der die Saugleistung eines Saugmähgerätes und auch dessen Verstopfungsgefahr wesentlich beeinflußt.

Der Erfindung liegt die Aufgabe zugrunde, das Schlagmesserschneidwerk der eingangs genannten Art so auszubilden, daß sich eine Vergrößerung der Schnittbreite ohne wesentliche Verringerung der Saugfähigkeit erreichen läßt.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

- 2 -                    0151217

Durch die vorgeschlagene Ausbildung des Schlagmesserschneidwerkes wird erreicht, daß das Schnittgut mit einer
zur Austrittsöffnung des Absauggehäuses hin gerichteten
Geschwindigkeitskomponente beaufschlagt wird. Hierdurch
ist gewährleistet, daß das Schnittgut von den von der
Austrittsöffnung des Absauggehäuses weiter entfernt
liegenden Bereichen zur Austrittsöffnung gelangt.

Die Neigung der Schneidkanten der Schlagmesser kann
dadurch erreicht werden, daß die Schlagmesser als
flache Messerklingen ausgebildet sind, die zur Achse
der Schlagwelle geneigt aufgehängt sind, sie kann
aber auch dadurch erreicht werden, daß die Messerklingen
gewölbt ausgebildet sind.

Die Förderwirkung der geneigten Schlagmesser kann
noch dadurch erhöht werden, daß sie wie bei einer
Förderschnecke spiralförmig um die Messerwelle
angeordnet sind. Bei an einem Ende der Messerwelle
liegender Austrittsöffnung des Absauggehäuses sind
alle Messer gleichsinnig geneigt, bei in der Mitte
liegender Austrittsöffnung sind sie zu beiden Seiten
der Mitte der Welle gegensinnig angeordnet.

Der Neigungswinkel der Messerklingen kann von dem
der Austrittsöffnung gegenüberliegenden Bereich der
Welle aus zum Wellenende bzw. zu den beiden Wellenenden hin zunehmen.

Bei außermittiger Anordnung der Austrittsöffnung kann
an dem Ende der Messerwelle, das der Austrittsöffnung
des Absauggehäuses abgewandt ist, eine niedrige
Bauhöhe des Absauggehäuses erreicht werden, so daß
Buschwerk, Leitplanken und dergleichen leicht unterfahren werden können.

Die Achse eines Saugrüssels, in den die Austrittsöffnung des Absauggehäuses mündet, kann zum einen Ende der Messerwelle geneigt verlaufen, so daß bei außermittiger Anordnung der Austrittsöffnung auf den bezüglich der Austrittsöffnung längeren Teil der Messerwelle eine größere Saugwirkung ausgeübt wird.

0151217

Die Erfindung wird nachstehend anhand der Figuren 1 bis 4 beispielsweise erläutert. Es zeigt:

Fig. 1 eine Seitenansicht des Schlagmesserschneidwerkes,

Fig. 2 eine Aufsicht des Schneidwerkes der Fig. 1,

Fig. 3 eine Aufsicht der Messerwelle mit spiralförmig angeordneten Schlagmessern, und

Fig. 4 die Neigung der Schlagmesser bei mittiger Anordnung der Austrittsöffnung des Absauggehäuses.

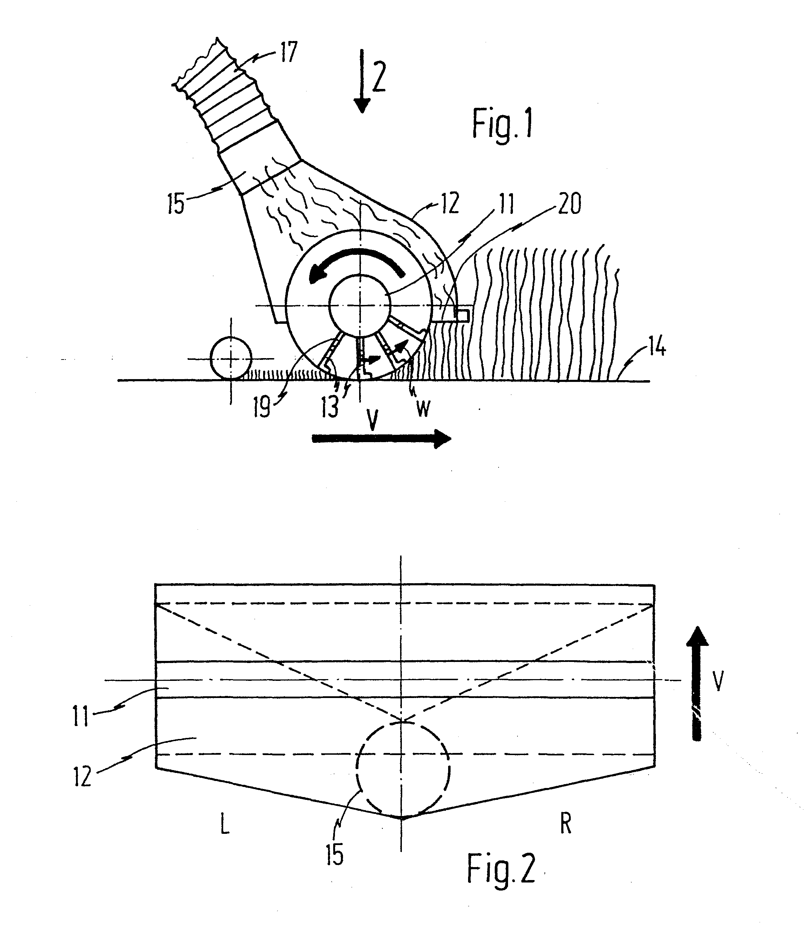

Das Schlagmesserschneidwerk der Fig. 1 besteht aus einer Messerwelle 11, an der in üblicher Weise an Aufhängungen 19 Schlagmesser 13 angeordnet sind, die bei Drehung der Welle die gezeigte Stellung einnehmen.

Die Messerwelle 11 ist in einem Absauggehäuse 12 angeordnet, das eine Ansaugöffnung 20 und eine Austrittsöffnung 15 hat, die in einen Saugrüssel 17 eines nicht gezeigten Auslegers mündet, der an einem Trägerfahrzeug angeordnet ist.

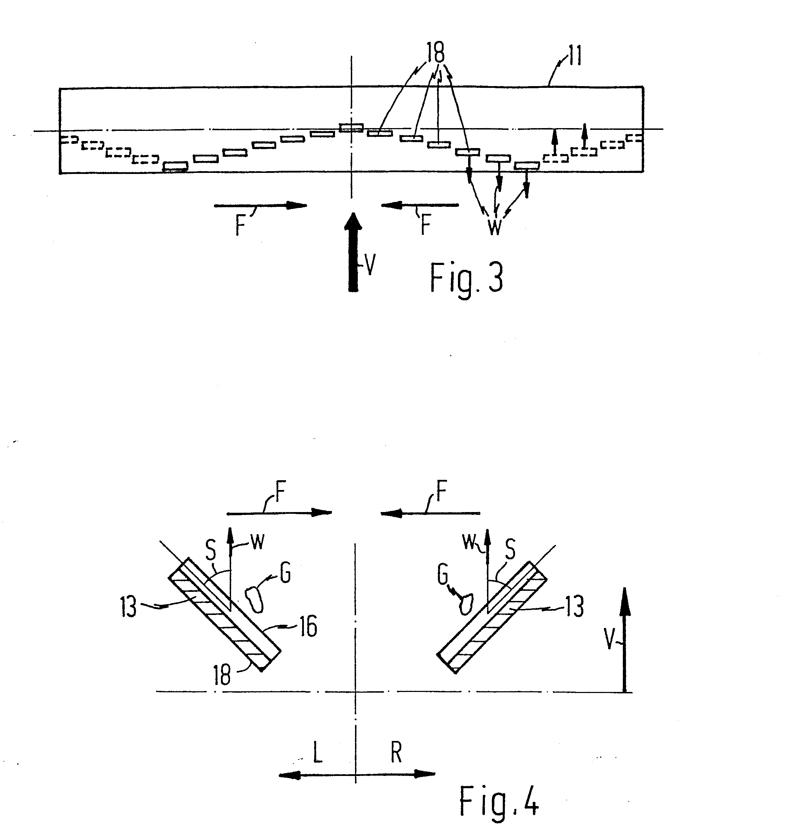

Wie Fig. 2 zeigt, ist die Austrittsöffnung 15 im Absauggehäuse 12 mittig angeordnet. Bei Fahrt in Richtung V, rückwärtsdrehender Messerwelle und Umfangsgeschwindigkeit der Schlagmesser in Richtung des Pfeils w wird das Schnittgut G in Querrichtung zur Austrittsöffnung 15 gefördert, wenn die Schneidmesser 13 entsprechend Fig. 4 geneigt sind. Bei einem Neigungswinkel $0° < S < 90°$ und vorzugsweise von 45° sind die Schlagmesser auf beiden Seiten der Mitte der Messerwelle entgegengesetzt geneigt, während sie bei

**0151217**

außermittig z.B. am einen Ende der Messerwelle liegender Austrittsöffnung über die gesamte Länge der Welle gleichsinnig geneigt sind. Bei der Ausführungsform der Fig. 4 verlaufen die Messerrücken 18 ebenso geneigt wie die Schneidkanten 16 der Schlagmesser.

Fig. 3 zeigt eine Ausführungsform, bei der die nur durch ihre Messerrücken 18 gezeigten Schlagmesser spiralförmig um die Messerwelle 11 angeordnet sind. Bei mittig liegender Austrittsöffnung des Absauggehäuses sind die Schlagmesser symmetrisch zur Mitte der Messerwelle 11 angeordnet. Liegt diese Austrittsöffnung am einen Ende der Welle, ist die Neigung bei allen Messern gleichsinnig.

0151217

Schlagmesserschneidwerk für ein Saugmähgerät

Patentansprüche

1. Schlagmesserschneidwerk mit wenigstens einer zu einer Mähfläche parallelen und im Absauggehäuse eines Mähwerks angeordneten Messerwelle mit Schlagmessern zum Mähen und Zerkleinern von Gras und leichtem Buschwerk, d a d u r c h   g e k e n n - z e i c h n e t ,   daß die Schneidkanten (16) der Schlagmesser (13) unter einem eine Förderbewegung zur Austrittsöffnung (15) des Absauggehäuses (12) hin bewirkenden Winkel (S) von $0° < S < 90°$ zu Achse der Messerwelle (11) geneigt verlaufen.

2. Schneidwerk nach Anspruch 1, d a d u r c h g e k e n n z e i c h n e t ,   daß der Neigungswinkel (S) etwa 45° beträgt.

3. Schneidwerk nach Anspruch 1 oder 2, bei dem die Austrittsöffnung des Absauggehäuses mittig zur Wellenachse angeordnet ist, d a d u r c h   g e - k e n n z e i c h n e t ,   daß die Schneidkanten (16) auf beiden Seiten der Mitte des Messerwelle (11) ent- gegengesetzt geneigt sind.

0151217

4. Schneidwerk nach einem der Ansprüche 1 bis 3, dadurch gekennzeichnet, daß die Schlagmesser (13) spiralförmig um die Messerwelle (11) angeordnet sind.

5. Schneidwerk nach einem der Ansprüche 1 bis 4, dadurch gekennzeichnet, daß auch die Messerrücken (18) geneigt zur Achse der Messerwelle (11) verlaufen.

6. Schneidwerk nach einem der Ansprüche 1 bis 5. dadurch gekennzeichnet, daß die Schlagmesser (13) als flache Messerklingen ausgebildet sind, die schräg zur Achse der Messerwelle (11) angeordnet sind.

7. Schneidwerk nach einem der Ansprüche 1 bis 6, dadurch gekennzeichnet, daß die Schlagmesser (13) als gewölbte Messerklingen ausgebildet sind.

8. Schneidwerk nach einem der Ansprüche 1 bis 7, dadurch gekennzeichnet, daß die einzelnen Schlagmesser unterschiedliche Neigungswinkel haben.

9. Schneidwerk nach einem der Ansprüche 1 bis 8, dadurch gekennzeichnet, daß sich der Neigungswinkel von dem der Austrittsöffnung des Absauggehäuses zugewandten Bereich der Schlagmesserwelle aus vergrößert.

10. Schneidwerk nach Anspruch 1 oder 2, bei dem die Austrittsöffnung des Absauggehäuses außermittig zur Wellenachse angeordnet ist, dadurch gekennzeichnet, daß die Achse eines Saugrüssels (17), in den die Austrittsöffnung (15) mündet, zum einen Ende der Messerwelle (11) geneigt verläuft.

Fig.1

Fig.2

Fig. 3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 3 084 493 (J.B. KUCERA) <br> * Gesamt * <br><br> -- | 1-4,7, 8 | A 01 D 34/86 <br> A 01 D 34/42 <br> A 01 D 34/52 |
| X | US - A - 2 841 946 (A.B. SKROMME) <br> * Gesamt * <br><br> -- | 1,4,6 | |
| A | US - A - 2 923 117 (S.W. HENDER-SON) <br><br> * Fig. 2-5 * <br><br> -- | 1,2,6 | |
| A | US - A - 2 479 937 (G.F. KNOWLES) <br> * Fig. 2,3 * <br><br> -- | 1,2,4, 7 | |
| A | DE - B - 1 183 734 (GLOSTER AIRCRAFT COMPANY) <br> * Fig. 1-3 * <br><br> -- | 1,6,8 | RECHERCHIERTE SACHGEBIETE (Int. Cl.4) <br><br> A 01 D 34/00 <br> A 01 D 49/00 |
| A | CH - A - 363 517 (YBBSTALER MASCHINENBAU ZOIDL & MERKINGER) <br><br> * Fig. 12,18; Seite 3, Zeilen 26-28, 92-116 * <br><br> -- | 1,2 | A 01 D 50/00 |
| A | US - A - 3 422 611 (A.G. BAROWS) <br> * Fig. 1,2 * <br><br> ---- | 1,2,6 | |

Der vorliegende Recherchenbericht wurde für alle Patentansprüche erstellt.

| Recherchenort <br> WIEN | Abschlußdatum der Recherche <br> 04-12-1984 | Prüfer <br> SCHWAB |
|---|---|---|